# EUROPEAN PATENT APPLICATION

(11) **EP 4 678 587 A1**
(43) Date of publication of application: **14.01.2026**
(21) Application number: 25719607.1
(22) Date of filing: 26.02.2025

(54) **FORK DEVICE, STORAGE AND RETRIEVAL SYSTEM, AND STORAGE AND RETRIEVAL METHOD**

(30) Priority: 10.05.2024 CN 202410575685
(71) Applicant: Beijing Jingdong Qianshi Technology Co., Ltd., Beijing 100176 (CN)
(72) Inventor: CHEN, Ying, Beijing 100176 (CN); ZHANG, Lei, Beijing 100176 (CN); YUAN, Mingjian, Beijing 100176 (CN); ZHANG, Guoliang, Beijing 100176 (CN); ZHANG, Genyun, Beijing 100176 (CN)
(74) Representative: Page White Farrer
(86) International application number: PCT/CN2025/079202
(87) International publication number: WO 2025/232324

(57) **Abstract**

The present disclosure relates to a load fork device, a warehousing system and a warehousing method, wherein the load fork device is configured to hand over the products with a handling device (40) having a carrying portion (41), and the load fork device (10) comprises a base (2); at least one fork (1) connected to the base (2) and arranged at intervals in a first direction (x), wherein the fork (1) is used for carrying the products, and the area between adjacent forks (1) and/or the outer side area of the fork (1) form a vertically-through handover passage (3) configured to allow the carrying portion (41) to vertically pass therethrough; and a storage and retrieval component configured to transfer the products between the fork (1) and a storage bin.

## Description

### CROSS-REFERENCE TO RELATED APPLICATIONS

The present disclosure is based on and claims priority to China Patent Application No. 202410575685.6 filed on May 10, 2024, the disclosure of which is incorporated by reference herein in its entirety.

### TECHNICAL FIELD

The present disclosure relates to the field of logistics warehousing technology, particularly relate to a load fork device, a warehousing system and a warehousing method.

### BACKGROUND

In the automatic warehousing system, the product warehousing system is an important technology to improve the warehousing production efficiency and reduce the logistics cost. The existing warehousing systems comprise a shelf-to-person system, a shuttle-based storage and retrieval system and the like. In recent years, the products have been handed over with a handling device by using a movable fork device on the shelf, and then transported outbound by the handling device, and vice versa for the inbound logistics process.

In the related art known by the inventors, the load fork and the plane of the handling device in which the products are carried are in the same plane, and the products are handed over by the load fork in the horizontal direction, which is likely to cause the failure of the product transfer due to errors, and it is necessary to level, align and fork during the process of product handover, which has complicated actions, slow tempo and low efficiency.

### SUMMARY

The present disclosure provides a load fork device, a warehousing system and a warehousing method, which can improve the accuracy and efficiency of product handover.

In a first aspect of the present disclosure, a load fork device for handing over products with a handling device having a carrying portion is provided. The load fork device comprises: a base; at least one fork connected to the base and arranged at intervals in a first direction, wherein the fork is configured to carry the products, and an area between two adjacent forks and/or an outer side area of the fork form a vertically-through handover passage configured to allow the carrying portion to vertically pass therethrough so that the carrying portion or the fork as a take member carries the products; and a storage and retrieval component configured to transfer the products between the fork and a storage bin.

In a second aspect of the present disclosure, a warehousing system is provided. The warehousing system comprises: a shelf configured to store products; the load fork device according to any of the above-described embodiments movable along a surface of the shelf and configured to perform a warehousing operation; and a handling device having a carrying portion configured to vertically pass through a handover passage so that the carrying portion or the fork as a take member carries the products.

In a third aspect of the present disclosure, a warehousing method of a warehousing system based on the above-described embodiments is provided. The warehousing method comprises: moving the handling device to a first preset position; moving the load fork device on the shelf to a second preset position; and causing the carrying portion to move vertically through the handover passage, so that the carrying portion or the fork as a take member carries the products to realize product handover.

### BRIEF DESCRIPTION OF THE DRAWINGS

The accompanying drawings described here which are intended to provide a further understanding of the present disclosure, constitute a part of the present application. The illustrative embodiments of the present disclosure as well as the descriptions thereof, which are intended for explaining the present disclosure, do not constitute improper definitions on the present disclosure. In the accompanying drawings:
Fig. 1 is a schematic structural view of some embodiments of a shelf of the present disclosure.
Fig. 2 is a schematic structural view of some embodiments of a warehousing system of the present disclosure.
Fig. 3 is a schematic structural view of a load fork device mounted on a vertical track.
Figs. 4A to 4D are schematic views of different states of product handover between the handling device with a fixed height of the carrying portion and the load fork device respectively.
Figs. 5A to 5D are schematic views of different states of product handover between the handling device with a lifting mechanism and the load fork device respectively.
Figs. 6A and 6B are schematic structural views of some embodiments of the load fork device from two perspectives respectively.
Fig. 7 is a schematic structural view of some embodiments of the handling device.
Fig. 8A is a schematic view of the state in which the load fork device carries the products.
Fig. 8B is a schematic view of the state in which the carrying portion of the handling device carries the products and the load fork device moves downward to release the products.
Figs. 9A to 9D are schematic views of different states in which the load fork device drives the products to move by the upper force applying member respectively.
Fig. 10A and Fig. 10B are a front view and a top view of the load fork device provided with force applying members on both sides to drive the products to move respectively.
Fig. 10C and Fig. 10D are schematic views of different states in which the load fork device is provided with force applying members on both sides to drive the products to move respectively.
Figs. 11A and 11B are top views of two forks approaching to carry the products and two forks departing to release the products respectively.
Fig. 12 is a side view of setting a first identification code and a second identification code.
Fig. 13 is a front view of setting a first identification code and a second identification code.
Fig. 14A is a side view of the load fork device carrying the products in an ex-warehouse stage, and Fig. 14B is a schematic view of the state in which the carrying device with a fixed height of the carrying portion carries the products after product handover.
Figs. 15A and 15C are a side view and a top view of the load fork device carrying the products in an ex-warehouse stage respectively; Fig. 15B is a schematic view of the state in which the handling device with a lifting mechanism carries the products after product handover.
Figs. 16A and 16B are schematic views of the state in which the carrying portion of the handling device with a fixed height carries the products, and the two forks depart from each other to release the products.
Figs. 17A to 17C are schematic views of the states in which the handling device travels in place, the handling device with a lifting mechanism carries the products, and the two forks depart from each other to release the products in an ex-warehouse stage respectively.
Figs. 18A and 18B are schematic views of two forks approaching to each other to carry the products and departing from each other to release the products respectively.
Fig. 19 is a schematic view of the state in which the handling device is located below the shelf and hands over the products with the load fork device.

### DETAILED DESCRIPTION

The technical solutions in the embodiments of the present disclosure will be explicitly and completely described below in conjunction with the accompanying drawings in the embodiments of the present disclosure. Apparently, the embodiments described are merely some of the embodiments of the present disclosure, rather than all the embodiments. The following descriptions of at least one exemplary embodiment which are in fact merely illustrative, shall by no means serve as any delimitation on the present disclosure as well as its application or use. Based on the embodiments of the present disclosure, all the other embodiments obtained by those skilled in the art on the premise that no inventive effort is involved shall fall into the protection scope of the present disclosure.

The techniques, methods, and devices known to those of ordinary skill in the relevant art might not be discussed in detail. However, the techniques, methods, and devices shall be considered as part of the specification where appropriate.

In the description of the present disclosure, it is necessary to understand that, the azimuth or positional relations indicated by the terms "center", "transverse", "longitudinal", "front", "rear", "left", "right", "up", "down", "vertical", "horizontal", "top", "bottom", "within", "outside", which are based on the azimuth or positional relations illustrated by the drawings, are only for facilitating description of the present disclosure and simplifying the description, rather than indicating or implying that the device or element referred thereto has to present a particular azimuth, and be constructed and operated in a particular azimuth, so that it cannot be understood as limiting the protection scope of the present disclosure.

In the description of the present disclosure, it is necessary to understand that such wordings as "first" and "second" which are used to define the parts, are only intended to facilitate distinguishing the corresponding parts. Unless otherwise specified, the aforementioned wordings do not have particular meanings, and thus cannot be understood as limiting the protection scope of the present disclosure.

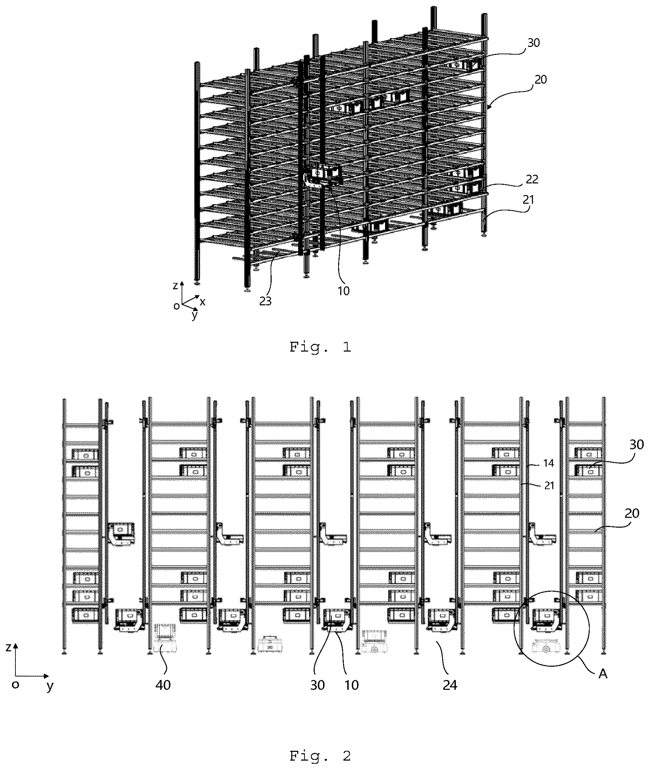

As shown in Figs. 1 to 19, Fig. 1 shows a shelf 20 in an automatic warehousing system. The shelf 20 includes a plurality of pillars 21 and a plurality of beams 22 that are connected with each other to form a multi-layer storage space. Each layer of storage space includes a plurality of storage locations for storing products 30, and the products may be placed by an accommodating member to facilitate the warehousing. Since the products appear more frequently in a subsequent description, the reference signs will be omitted.

One or more load fork devices 10 are arranged on the outer side of the shelf 20, and the load fork devices 10 may reach a preset position on the outer side of the shelf 20 for a warehousing operation. The inbound operation of the products is to handle the products from the external workstation to the target inbound storage location of the shelf 20, and the outbound operation of the products is to transport the products from the target inbound storage location to the external workstation.

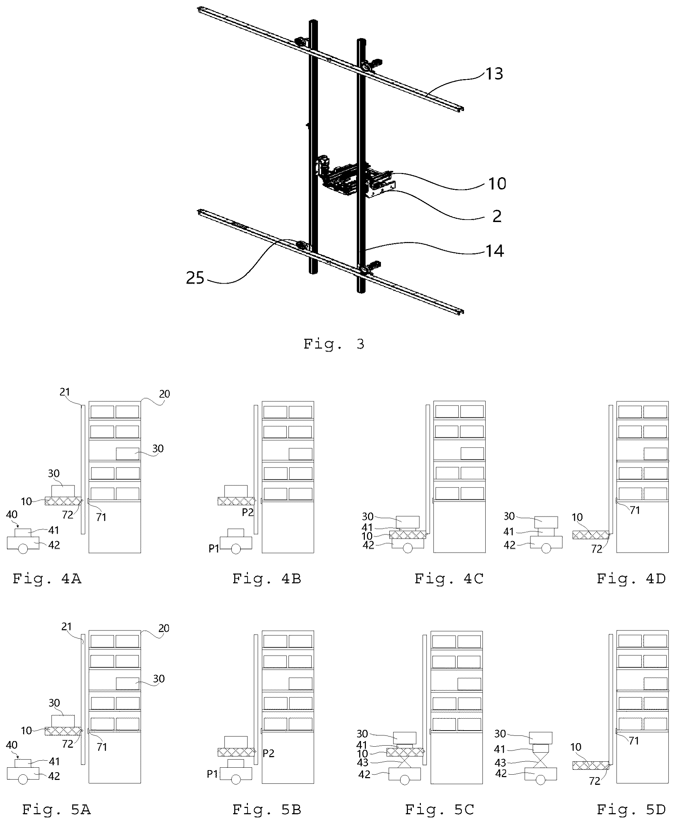

As shown in Figs. 2 and 3, two horizontal rails 13 arranged at intervals along the height direction z and two vertical rails 14 arranged at intervals along the width direction (first direction x) of the shelf 20 are arranged on the outer side of the shelf 20, and the two vertical rails 14 may slide along the horizontal rails 13 in the first direction x. The load fork device 10 mounted on the two vertical rails 14 is liftable along the vertical rails 14. Therefore, the load fork device 10 which has freedom of movement in two directions, may flexibly move to a preset position on the outer side surface of the shelf 20.

Specifically, as shown in Fig. 2, when an inbound operation is performed on the products, the inbound products are handled from the workstation through a transition area to the periphery of the shelf 20 by using the handling device 40 (for example, a transfer trolley), and then the products are retrieved from the handling device 40 by the load fork device 10 on the shelf 20 and stored in the target inbound storage location. When an outbound operation is performed on the products, the outbound products are transferred from the target outbound storage location to the handling device 40 by the load fork device 10 on the shelf 20, and then the outbound products are handled to the workstation through the transition area by the handling device 40.

For example, the handling device 40 which is an automated guided vehicle with an automatic navigation function, may travel between the shelf 20 and the workstation, and is provided with a carrying portion 41 for carrying products.

First of all, the embodiment of the load fork device 10 will be described below. The load fork device 10 is used to hand over the products with a handling device 40 having a carrying portion 41.

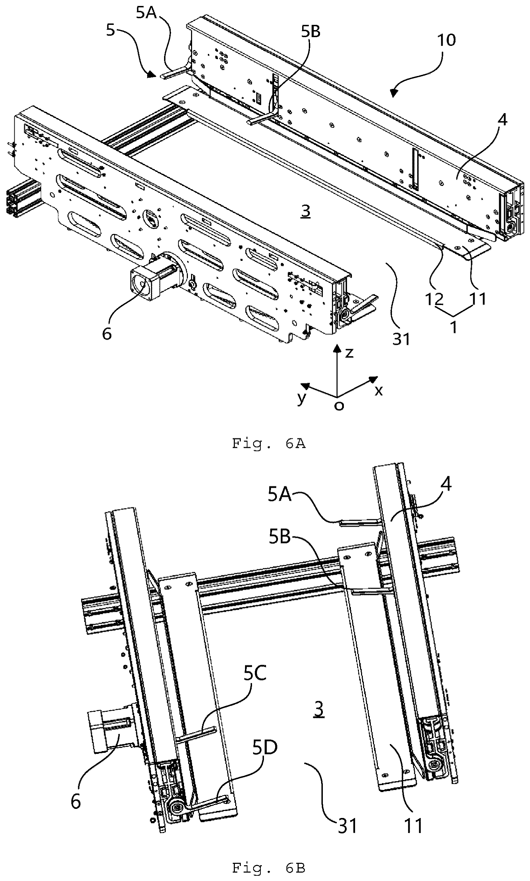

In some embodiments, Fig. 6A is a schematic structural view of some embodiments of the load fork device of the present disclosure, and the load fork device 10 comprises: a base 2; at least one fork 1 connected to the base 2 and arranged at intervals in a first direction x, wherein the fork 1 is configured to carry the products, and the area between adjacent forks 1 and/or the outer side area of the fork 1 form a vertically-through handover passage 3 configured to allow the carrying portion 41 to vertically pass therethrough so that the carrying portion 41 or the fork 1 as a take member carries the products; a storage and retrieval component configured to transfer the products between the fork 1 and a storage location.

Among them, as shown in Fig. 3, the base 2 is configured to be mounted on the vertical rail 14 on the outer surface of the shelf 20, and the load fork device 10 is liftable along the vertical rail 14. The vertical rail 14 is provided with a walking mechanism to cooperate with the transverse rail 13 mounted on the shelf 20, and the walking wheel 25 in the walking mechanism is in contact with the transverse rail 13 so that the vertical rail 14 drives the load fork device 10 to horizontally run along the surface of the shelf 20 along the first direction x. The base 2 is configured to mount the fork 1, and its specific structure is not limited. The fork 1 extends along the second direction y perpendicular to the first direction x.

For example, one, two or more forks 1 may be provided. When one fork 1 is provided, the fork 1 may carry a product by carrying an intermediate area of the product bottom along the first direction x, the outer side of the fork 1 along the first direction x forms a handover passage 3, and the top of the carrying portion 41 may have two carrying surfaces for vertically entering the handover passage 3 from both sides of the fork 1 to realize the product handover. When two forks 1 are provided, the two forks 1 jointly carry the products, the handover passage 3 may be formed in the area between the two forks 1 and/or in the area outside the forks 1 on both sides, and the carrying portion 41 may be provided with a proper number of carrying surfaces as required. When more than three forks 1 are provided, a plurality of forks 1 form a comb-tooth structure. According to the sizes of the products, all the forks 1 may jointly carry the products, or some forks 1 may jointly carry the products; the handover passage 3 may be formed in the area between two adjacent forks 1 in each group and/or in the area outside the forks 1 on both sides; and the carrying portion 41 may be provided with a proper number of carrying surfaces as required.

During the product handover, the handover passage 3 allows the carrying portion 41 to pass vertically. Specifically, in the ex-warehouse stage, the fork 1 serves as a give member and the carrying portion 41 serves as a take member, and the carrying portion 41 enters the handover passage 3 from bottom to top to carry the products. In the in-warehouse stage, the carrying portion 41 serves as a give member and the fork 1 serves as a take member, and the carrying portion 41 enters the handover passage 3 from top to bottom, so that the fork 1 carries the products.

The load fork device 10 of this embodiment has a vertically-through handover passage 3, which allows the carrying portion 41 of the handling device 40 to pass vertically to hand over the products, so that the load fork device 10 and the handling device 40 may transfer the products in the vertical direction without leveling and aligning the fork 1 and the carrying portion 41 in the horizontal plane or moving the products in the horizontal plane, thereby simplifying the action process of handing over the products, improving the accuracy of product handover, reducing the time required for handing over the products and improving the handover efficiency.

In some embodiments, the carrying portion 41 includes at least one carrying surface, and the at least one fork 1 is configured to be alternately arranged with the at least one carrying surface when the products are handed over.

When there are a plurality of carrying surfaces, the plurality of carrying surfaces are arranged at intervals along the first direction x. When one fork 1 is provided, the top of the carrying portion 41 may have two carrying surfaces for vertically entering the handover passage 3 from both sides of the fork 1 to realize the product handover. When two forks 1 are provided, the carrying portion 41 may have one carrying surface to vertically enter the handover passage 3 between the two forks 1. Alternatively, the carrying portion 41 has three carrying surfaces to enter the area between the two forks 1 and the handover passages 3 outside the two forks 1 respectively. When more than three forks 1 are provided, the carrying portion 41 has more than two carrying surfaces to enter the area between every two adjacent forks 1 and the handover passage 3 outside the two forks 1 respectively.

In this embodiment, the carrying surfaces of the carrying portions 41 and the forks 1 are alternately arranged in the first direction x, so that each carrying surface may enter the handover passage 3 to realize the product handover in the vertical direction. Moreover, this arrangement structure may provide stable support for the products of the load fork device 10 and the carrying portions 41 of the handling device 40, which ensures the stability of carrying the products.

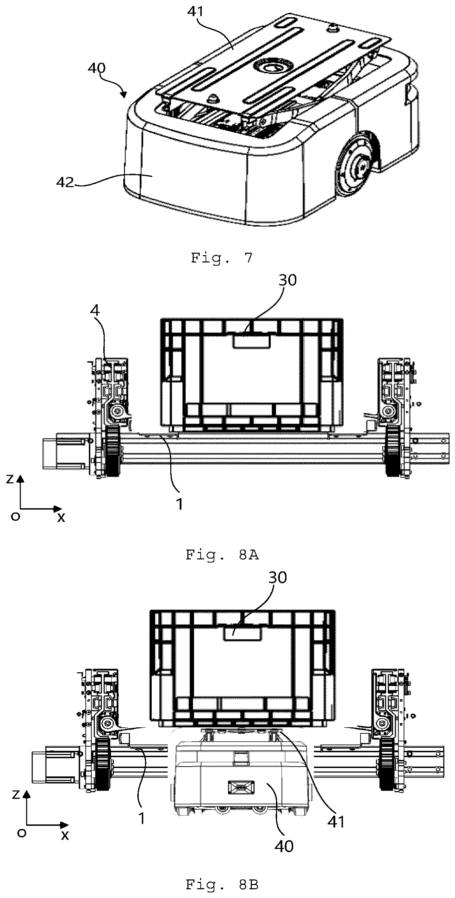

In some embodiments, as shown in Figs. 6A and 8A, there are two forks 1, and the area between the two forks 1 forms the handover passage 3, and the width of the handover passage 3 in the first direction x is smaller than the width of a product bottom to carry the products.

The load fork device 10 of this embodiment is provided with two forks 1 in a simple structure so that stable support may be provided from both sides of the products in the first direction x. Moreover, when the handling device 40 hands over the products, the carrying portion 41 is located in the intermediate area of the product bottom along the first direction x, which may also provide stable support for the products and reduce the machining difficulty of the carrying portion 41.

In some embodiments, as shown in Fig. 8B, in the first direction x, the width of the handover passage 3 is greater than the width of the carrying portion 41.

In this embodiment, the distance between the two forks 1 in the first direction x is larger than the width of the carrying portion 41, so that intervals may be maintained between both sides of the carrying portion 41 and the forks 1. When the products are handed over vertically, the carrying portion 41 may smoothly enter the handover passage 3 so that it is possible to reduce the positioning accuracy requirements of the load fork device 10 and the handling device 40 in the first direction x and reduce the alignment difficulty, thereby further improving the success rate and efficiency of handing over the products.

In some embodiments, as shown in Fig. 6A, the two forks 1 are configured to depart from or approach to each other in the first direction x, so as to allow the handling device 40 to leave the forks 1 in the case that the width of the handover passage 3 is greater than the width of the product bottom.

For example, the base 2 may include a guide rail, and the fork 1 may be movably arranged in the first direction x along the guide rail.

In this embodiment, it is possible that the two forks 1 depart from each other to release the products after the carrying portion carries the products in an ex-warehouse stage, and approach to each other to carry the products in an in-warehouse stage. After the carrying portion 41 carries the products in an ex-warehouse stage, the two forks 1 depart from each other, and when the handling device 40 leaves after carrying the products, it is possible to prevent collision with the forks 1, thereby improving the outbound reliability.

In some embodiments, the fork 1 is configured to have a gap with the carrying portion 41 in the first direction x in the case that the products are handed over.

In this embodiment, when the products are handed over vertically, the carrying portion 41 may smoothly enter the handover passage 3 so that it is possible to reduce the positioning accuracy requirements of the load fork device 10 and the handling device 40 in the first direction x and reduce the alignment difficulty, thereby further improving the success rate and efficiency of handing over the products.

In some embodiments, there are at least two forks 1, and an end along a second direction y of the handover passage 3 is provided with an opening 31 configured to allow the handling device 40 that carries the products to leave the forks 1, and the second direction y is perpendicular to the second direction. For example, an opening 31 may be provided at one end of the fork 1 to only allow the handling device 40 to enter and exit from one side, or an opening 31 may be provided at both ends of the fork 1 to allow the handling device 40 to enter and exit from both sides.

In this embodiment, a fixed structure is maintained for the distance between the two forks 1, which facilitates the carrying portion 41 to enter or leave the handover passage 3. In an ex-warehouse stage, after the products are transferred to the carrying portion 41, the load fork device 10 cannot move upward and leave, but can only move downward and release the products in the vertical direction. By providing the opening 31 at the end of the fork 1, it is possible to allow the handling device 40 carrying the products to leave the load fork device 10. In an in-warehouse stage, it is necessary to first allow the load fork device 10 to descend to the top surface of the fork 1 lower than the carrying portion 41, and then allow the handling device 40 carrying the products to enter the area of the handover passage 3. By providing the opening 31, it is possible to allow the carrying portion 41 to enter the handover passage 3 through the opening 31.

In some embodiments, each fork 1 includes a fixing portion 12 and a support portion 11, wherein the support portion 11 is movable in a second direction y relative to the fixing portion 12, and the second direction y is perpendicular to the first direction x.

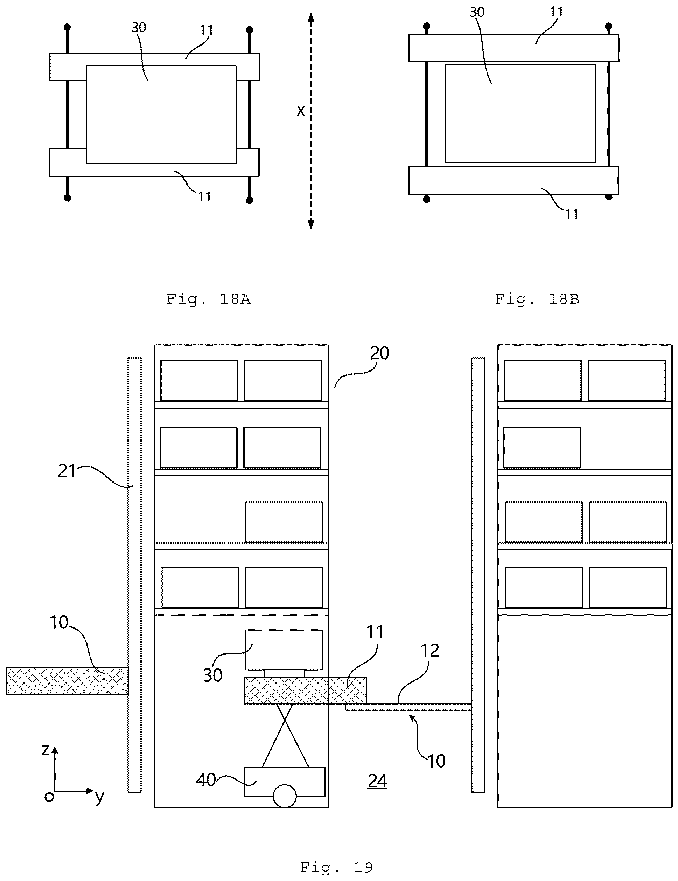

In this embodiment, the support portion 11 is provided to be telescopic relative to the fixing portion 12. As shown in Fig. 19, when the handling device 40 docks in the lower area of the shelf 20, the support portion 11 of the load fork device 10 on the shelf 20 may project backward to enter the lower area of the shelf 20 to hand over the products. Alternatively, the support portion 11 of the load fork device 10 on the adjacent shelf 20 may project forward to enter the lower area of the shelf 20 to hand over the products. This structure may also satisfy the requirements of handing over the products in the vertical direction when the handling device 40 does not dock in the area directly below the load fork device 10, so that the docking position of the handling device 40 is more flexible.

Three embodiments that may be used by the storage and retrieval assembly will be given below.

In some embodiments, as shown in Fig. 6A, the storage and retrieval assembly comprises two fork arms 4 arranged on the outer sides of the two forks 1 respectively. The fork arms 4 which are telescopic relative to the forks 1 along the second direction y, are configured to extend when the product storage and retrieval is required, and retract after the product storage and retrieval is completed. In a state that the forks 1 carry the products, the fork arms 4 may block the products from falling laterally. The fixing portion 12 is vertically connected to the bottom of the corresponding fork arm 4. Alternatively, the storage and retrieval assembly further comprises a driving member 6 configured to drive the fork arm 4 to be telescopic relative to the forks 1. For example, the driving member 6 may be an electric motor or a motor.

As shown in Fig. 6B, the storage and retrieval assembly further includes a plurality of retrieval members 5. For example, the inner side walls of the two fork arms 4 are both provided with retrieval members 5 to cooperate in use in pairs. When the products are retrieved, the two retrieval members 5 of the two fork arms 4 located at the same position in the second direction y are in contact with the same surface of the products. Alternatively, the retrieval member 5 is rotatably arranged in a plane perpendicular to the second direction y, and configured to place the products when rotating to a retracted state, and configured to limit the products when rotating to an open state (for example, a horizontal state) so as to move the products out of the storage location of the shelf 20 or convey the products into the storage location of the shelf 20. For example, the retrieval member 5 may be designed as a rod structure to form a shift fork.

The operation principles of this storage and retrieval assembly are as follows:
Specifically, the two fork arms 4 are both provided with four retrieval members 5 at intervals along the second direction y, which are a first retrieval member 5A, a second retrieval member 5B, a third retrieval member 5C and a fourth retrieval member 5D respectively, and the retrieval members 5 located at the same position on the two fork arms 4 form a pair of retrieval members 5, so as to satisfy the storage and retrieval requirements of the products with different placement depths or different products sizes on the shelf 20. For example, in the case where the sizes of the products are consistent, a pair of first retrieval members 5A and a pair of third retrieval members 5C cooperate in use to obtain the products stored on the inner side of the shelf, and a pair of second retrieval members 5B and a pair of fourth retrieval members 5D cooperate in use to obtain the products on the outer side of the shelf. When the products are retrieved, the fork arm 4 may extend relative to the fork 1.

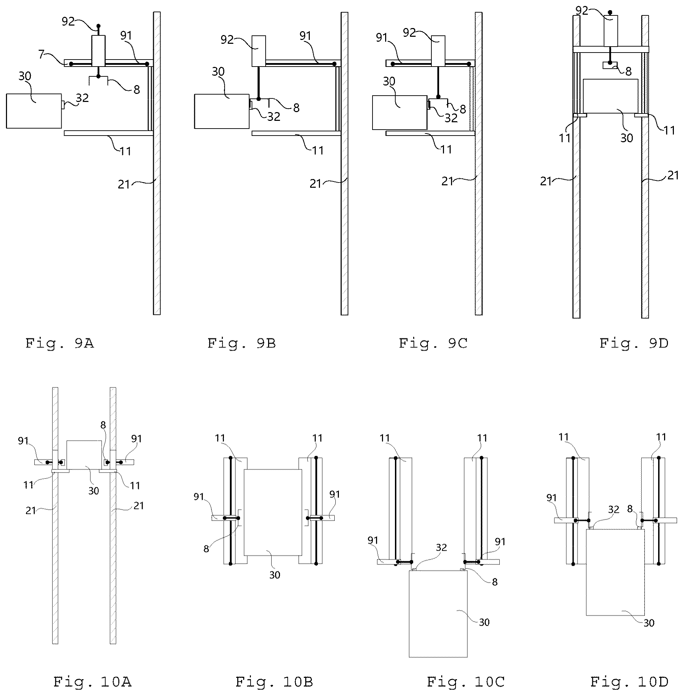

In some embodiments, as shown in Figs. 9A to 9D, the storage and retrieval assembly further comprises: a mounting member 7 arranged above the fork 1 and connected to the base 2; a force applying member 8 arranged at a lower portion of the mounting member 7 and configured to drive the products to move from the top or the end of the products; a traversing mechanism 91 arranged on the mounting member 7 and configured to drive the force applying member 8 to move in a second direction y perpendicular to the first direction x; and a lifting mechanism 92 arranged on the mounting member 7 and configured to drive the force applying member 8 to lift.

For example, the force applying member 8 is a hook, and the front end surface of the products 30 is provided with a pulling ring or the like. Alternatively, the force applying member 8 is a sucker, and the front end surface of the products 30 is provided with an adsorption portion.

For example, as shown in Fig. 9A, when the products need to be retrieved from the storage location of the shelf 20, the traversing mechanism 91 may drive the force applying member 8 to move in the direction of the products, and Fig. 9D is a front view of Fig. 9A. As shown in Fig. 9B, until the force applying member 8 reaches a position close to the outer end of the fork 1, the lifting mechanism 92 drives the force applying member 8 to descend to a part under stress on the front end surface of the products for connection. As shown in Fig. 9C, the traversing mechanism 91 drives the force applying member 8 to move, so as to move the products onto the fork 1. Similarly, the mechanism may also move the products on the fork 1 to the storage location of the shelf 20.

In this embodiment, a pulling force may be applied to the top or end of the products by the force applying member 8 so as to transfer the products from the shelf 20 to the fork 1 or from the fork 1 to the shelf 20. This method which is not affected by the length of the products in the second direction y, may improve the adaptability to different sizes of products.

In some embodiments, as shown in Figs. 10A to 10D, the storage and retrieval assembly further comprises: two mounting members 7 arranged on both sides of the two forks 1 and connected to the base 2 respectively; two force applying members 8 arranged at the inner sides of the two mounting members 7 and configured to drive the products to move from two side areas respectively; and two traversing mechanisms 91 arranged on the two mounting members 7 and configured to drive the force applying member 8 at the side to move along a second direction y perpendicular to the first direction x respectively.

For example, Figs. 10A and 10B are a front view and a top view of the products located on the fork 1 respectively. As shown in Fig. 10C, when the products need to be retrieved from the storage bin of the shelf 20, the transversing mechanisms 91 on both sides may drive the corresponding force applying members 8 to move in the direction of the products until the force applying members 8 reach a position close to the outer end of the fork 1, and the end of the products may be provided with two parts under stress, or both sides of the products are provided with one part under stress respectively, and the two force applying members 8 are connected with the two parts under stress respectively. As shown in Fig. 10D, the traversing mechanisms 91 on both sides drive the corresponding force applying members 8 to move synchronously, so as to move the products onto the fork 1. Similarly, the mechanism may also move the products on the fork 1 to the storage location of the shelf 20.

In this embodiment, a pulling force may be applied to the area on both sides of the products by the two force applying members 8 so as to transfer the products from the shelf 20 to the fork 1 or from the fork 1 to the shelf 20. This method may make the transfer process of the products more stable, and prevent the fork 1 from defecting upon movement to affect a subsequent product handover. Moreover, this method which is not affected by the length of products in the second direction y, may improve the adaptability to different sizes of products. In addition, a lifting mechanism may be omitted, which simplifies the structure of the load fork device 10.

In some embodiments, the fork 1 is provided with a conveying member configured to cooperate with the force applying member 8 to move the products in place on the fork 1 or remove the products from the fork 1.

For example, the handling device 40 docks in the lower area of one shelf 20 and hands over the products by the load fork devices 10 on adjacent shelves 20. After the traversing mechanism 91 drives the products to move for a certain distance, affected by the pillar 21 and the beam 22 of the shelf 20, the traversing mechanism 91 cannot continue to move in a larger stroke. At this time, the conveying member may drive the products in place. For example, the conveying member may be a conveyor belt, a roller or the like.

In this embodiment, by providing a conveying member on the fork 1, it is possible to cooperate with the force applying member 8 so that the products obtain a larger movement stroke, which improves the flexibility of scheduling the docking positions of the load fork device 10 and the handling device 40 during the product handover.

Next, the present disclosure provides a warehousing system. In some embodiments, as shown in Fig. 2, the warehousing system comprises: a shelf 20 configured to store products; the load fork device 10 according to the above-described embodiments movable along a surface of the shelf 20 and configured to perform a warehousing operation; and a handling device 40 having a carrying portion 41 configured to vertically pass through a handover passage 3 so that the carrying portion 41 or the fork 1 as a take member carries the products. For example, the carrying portion 41 may be a pallet or the like.

Wherein, the load fork device 10 may be mounted on the shelf 20, for example, the load fork device 10 is mounted on the shelf 20 through the vertical rail 14 and the horizontal rail 13. Alternatively, the load fork device 10 is hoisted by the rail provided above. These two structures may make the load fork device 10 move along the surface of the shelf 20.

Wherein, one or more shelves 20 may be provided, and a plurality of shelves 20 are arranged at intervals along the second direction y, and an aisle 24 is formed between adjacent shelves 20. The load fork device 10 is on the outer side surface of the shelf 20 and movable along the height direction z and the first direction x. The location A in Fig. 2 shows that the handling device 40 docks in the aisle 24 to hand over the products, and the remaining locations show that the handling device 40 docks in the lower area of the shelf 20 to hand over the products or is in a standby state.

In this embodiment, the load fork device 10 and the handling device 40 which use a mode of vertical product handover, may simplify the action process of product handover, improve the accuracy of product handover, reduce the time required for product handover, and improve the handover efficiency, thereby improving the overall handover efficiency in the automatic storage system.

In some embodiments, the carrying portion 41 and the fork 1 are configured to move vertically relative to each other so that the take member is in contact with a product bottom to carry the products. Specifically, the technical solutions that only the carrying portion 41 moves vertically, only the fork 1 moves vertically or both of them move are within the protection scope.

In the ex-warehouse stage, the load fork device 10 carries the products, and the fork 1 should be in an initial position higher than the top surface of the carrying portion 41, so as to move the handling device 40 to move below the fork 1. In this way, the carrying portion 41 enters the handover passage 3 from bottom to top. Then, by way of a relative movement mode that the load fork device 10 moves downward or the carrying portion 41 moves upward, the carrying portion 41 is in contact with the product bottom to carry the products.

In the in-warehouse stage, the handling device 40 carries the products, and the fork 1 should be in an initial position lower than the top surface of the carrying portion 41, so as to move the handling device 40 to move to a position of the fork 1. In this way, the carrying portion 41 enters the handover passage 3 from top to bottom. Then, by way of a relative movement mode that the load fork device 10 moves upward or the carrying portion 41 moves downward, the fork 1 is in contact with the product bottom to carry the products.

In this embodiment, it is possible to allow that the handling device 40 smoothly reaches the area where the products are handed over to the load fork device 10, and implement that the take member carries the products.

In some embodiments, the carrying portion 41 and the fork 1 are configured to move relative to each other so that the carrying portion 41 or the fork 1 as a give member releases the products after the take member carries the products.

The relative movement may be the relative movement in the vertical direction or the relative movement in the first direction x.

In this embodiment, it is possible to release the give member from the products after the take member has carried the products, so that the take member carries the products to leave smoothly.

In some embodiments, as shown in Fig. 4A to 4D, the handling device 40 further includes a main body portion 42, and the carrying portion 41 is fixed in height relative to the main body portion 42; and the load fork device 10 is configured to move up and down so that the take member is in contact with a product bottom to carry the products, and move up and down so that the carrying portion 41 or the fork 1 as a give member releases the products.

Specifically, in the ex-warehouse stage, the carrying portion 41 carries the products by moving downwards, and after the carrying portion 41 carries the products, it continues to move downwards to release the fork 1 from the products; and/or the load fork device 10 is configured to move upward in the in-warehouse stage so that the fork 1 carries the products, and continue to move upward after the fork 1 carries the products to release the carrying portion 41 from the products.

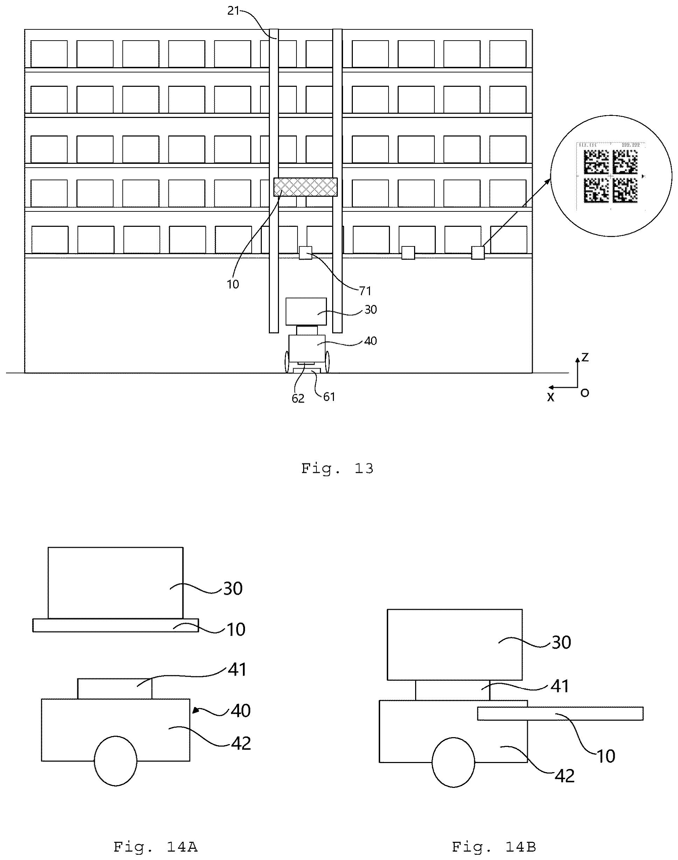

Taking the ex-warehouse stage as an example, as shown in Fig. 4A, the load fork device 10 moves to the second preset position P2. As shown in Figs. 4B and 14A, the handling device 40 moves to the first preset position P1 according to a preset path, and at this time, the handling device 40 is located directly below the load fork device 10. As shown in Fig. 4C, the load fork device 10 is lowered. During this process, the carrying portion 41 enters the handover passage 3 and carries the products by the carrying portion 41, and the load fork device 10 continues to descend and release from the product bottom. As shown in Figs. 4D and 14B, the handling device 40 carries the products out of the opening 31 of the load fork device 10 and leaves the area where the load fork device 10 is located.

In this embodiment, the carrying portion 41 of the handle device 40 with a fixed height, a simple structure and a low cost, may realize the whole product handover process by moving the load fork device 10 in the height direction z with convenient control. Moreover, since the carrying portion 41 which remains fixed may stably carry the products with a low center of gravity during the leaving process after the product handover is completed, which is beneficial to improving the traveling speed, thereby improving the efficiency of transferring the products to the target position.

In some embodiments, the load fork device 10 further includes a ranging sensor configured to detect a descending height of the load fork device 10 so that the descending height of the fork 1 does not exceed a preset distance after the carrying portion 41 carries the products in an ex-warehouse stage. The ranging sensor may detect a distance between the fork 1 and the product bottom, a distance between the fork 1 and a reference part on the handling device 40, a distance between the fork 1 and the ground or a distance between the fork 1 and a reference part on the shelf 20. For example, the ranging sensor may be arranged at the bottom or end of the fork 1.

By providing a ranging sensor, after the products are carried on the carrying portion 41 in the ex-warehouse stage, the fork 1 descends by a proper distance to transfer the products onto the carrying portion 41 and release the products, so as to prevent interference and collision with the main body portion 42 of the handling device 40.

Alternatively, the handling device 40 further includes a weight sensor arranged on the carrying portion 41 and configured to detect a weight change of the carrying portion 41, so that the load fork device 10 stops descending in the case where the weight change of the carrying portion 41 after contacting with the product bottom in an ex-warehouse stage reaches a preset weight.

By providing a weight sensor, it is possible to detect the situation of carrying the products by the carrying portion 41 in the ex-warehouse stage. In the case where the weight change reaches a preset weight, it is indicated that the products have been reliably transferred to the handling device 40. At this time, the load fork device 10 is controlled to stop descending to prevent interference and collision with the main body portion 42 of the handling device 40.

In some embodiments, as shown in Figs. 5A to 5D, the handling device 40 further includes a main body portion 42 and a lifting mechanism 43, the carrying portion 41 is mounted on the main body portion 42 in a liftable manner through the lifting mechanism 43, and the lifting mechanism 43 is configured to lift so that the take member is in contact with the product bottom to carry the products, and/or lift so that the carrying portion 41 or the fork 1 as a give member releases the products.

As shown in Fig. 8, the top of the main body portion 42 is provided with an accommodating cavity in which the lifting mechanism 43 is arranged, and the top of the lifting mechanism 43 is provided with a carrying portion 41. The lifting mechanism 43 may be a fork scissor mechanism, a linear drive mechanism or the like.

Specifically, in the ex-warehouse stage, the lifting mechanism 43 is lifted to make the carrying portion 41 in contact with the product bottom to carry the products, and continues to lift upwards to release the fork 1 from the products after the carrying portion 41 carries the products. Alternatively, the product fork device 10 descends so that the fork 1 releases the products. The lifting mechanism 43 is configured to descend in the in-warehouse stage so that the fork 1 is in contact with the product bottom to carry the products, and continue to descend after the fork 1 carries the products, so that the carrying portion 41 releases the products. Alternatively, the load fork device 10 lifts so that the carrying portion 41 releases the products.

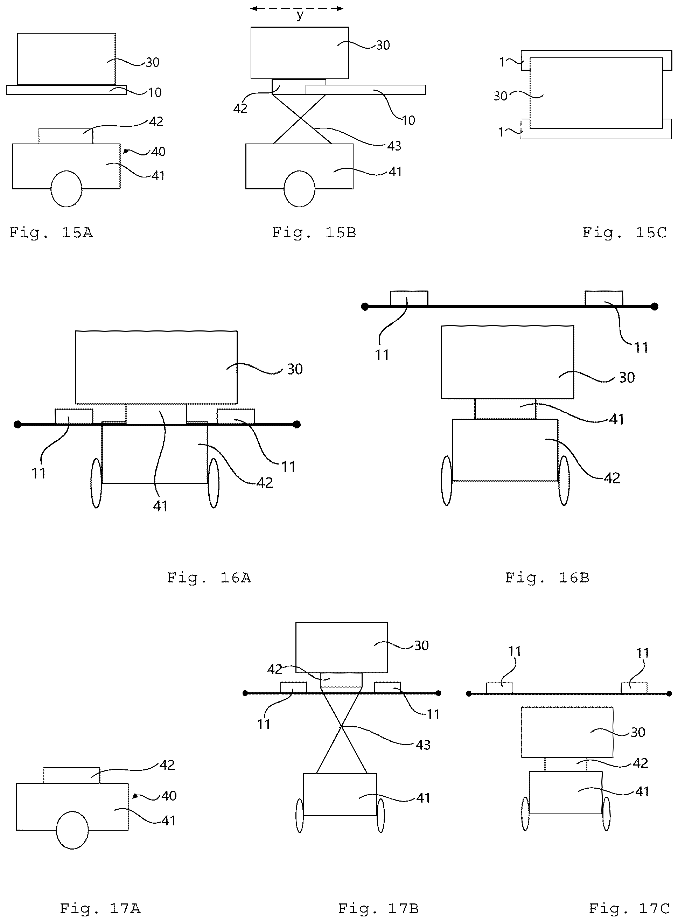

Taking the ex-warehouse stage as an example, as shown in Fig. 5A, the load fork device 10 moves to the second preset position P2, and Fig. 15C is a top view of the product 30 located on the fork 1. As shown in Figs. 5B and 15A, the handling device 40 moves to the first preset position P1 according to a preset path, and at this time, the handling device 40 is located directly below the load fork device 10. As shown in Fig. 5C, the lifting mechanism 43 ascends. During this process, the carrying portion 41 enters the handover passage 3 and carries the products by the carrying portion 41, and the lifting mechanism 43 continues to ascend so that the fork 1 releases the product bottom. As shown in Figs. 5D and 15B, the load fork device 10 descends or may also remain in the position of Fig. 5C, the handling device 40 carries the products out of the opening 31 of the load fork device 10 and leaves the area where the load fork device 10 is located.

In this embodiment, the handling device 40 is provided with a lifting mechanism 43, so that the lifting mechanism 43 lifts the carrying portion 41 to satisfy the requirements of handing over the products with the load fork device 10, which may reduce the requirements of the docking height position of the load fork device 10. Moreover, after the handling device 40 carries the products, the products may be placed in a high position, which may adapt to a manual operation height during subsequent manual pickup at the workstation.

In some embodiments, as shown in Figs. 1 and 2, the handling device 40 further includes a main body portion 42 and a lifting mechanism 43, the carrying portion 41 is mounted on the main body portion 42 through the lifting mechanism 43 in a liftable manner, and the lower area of the shelf 20 is provided with a buffer rack 23, and the handling device 40 is configured to hand over the products with the buffer rack 23. The lifting mechanism 43 is configured to lift so that the carrying portion 41 or the buffer rack 23 as a take member is in contact with the product bottom to carry the products, and lift so that the carrying portion 41 or the buffer rack 23 as a give member release the products.

Specifically, in the ex-warehouse stage, the lifting mechanism 43 ascends so that the carrying portion 41 carries the products, and continues to hoist upwards after the carrying portion 41 carries the products to release the buffer shelf 23 from the products. Moreover, in the in-warehouse stage, the lifting mechanism 43 descends so that the buffer shelf 23 carries the products, and continues to descend after the buffer shelf 23 carries the products so that the carrying portion 41 releases the products.

In this embodiment, the handling device 40 is provided with a lifting mechanism 43, so that the lifting mechanism 43 lifts the carrying portion 41 to satisfy the requirements of handing over the products to the buffer shelf 23. During the warehousing process, the products to be outbound by the load fork device 10 may be transferred to the handling device 40, and when the handling device 40 is occupied or malfunctioned so that it is impossible to reach the shelf 20, or when the current workstation does not need the products, the products may also be placed on the buffer shelf 23 temporarily. The products to inbound by the handling device 40 may be transferred to the load fork device 10 for direct storage. Alternatively, when the load fork device 10 is occupied, the handling device 40 may also place the products on the buffer shelf 23, which saves the standby time and the idle time of the handling device 40 and the load fork device 10 so as to improve the warehousing efficiency.

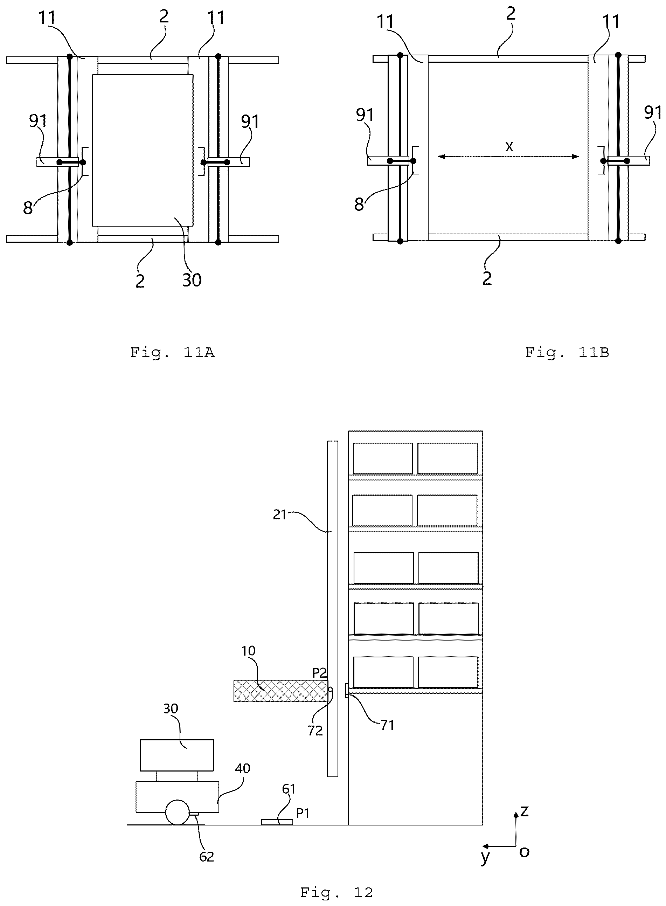

In some embodiments, as shown in Figs. 11A and 11B and Figs. 18A and 18B, the two forks 1 are capable of departing from and approaching to each other in the first direction x, and configured to depart from each other to release the products after the carrying portion 41 carries the products in an ex-warehouse stage, and approach to each other to carry the products in an in-warehouse stage.

In this embodiment, after the carrying portion 41 carries the products in an ex-warehouse stage, the two forks 1 depart from each other, and when the handling device 40 leaves after carrying the products, it is possible to prevent collision with the forks 1, thereby improving the outbound reliability, and apply to a structure where an opening is not provided at the end of the fork 11.

For the embodiment in which the two forks 1 may depart from or approach to each other along a first direction x, two embodiments will be given below for different handling devices 40.

As shown in Figs. 16A and 16B, for the handling device 40 in which the carrying portion 41 has a fixed height relative to the main body portion 42, in the ex-warehouse stage, after the carrying portion 41 carries the products, the load fork devices 10 may be first moved downward for a certain distance, and then moved away from the product bottom by departing from each other in the first direction x. Next, the load fork devices 10 move upwards to be higher than the product top, and then the handling device 40 carrying the products leaves so that it is possible to prevent collision with the fork 1 and improve the outbound reliability.

As shown in Fig. 17A to Fig. 17C, for the handling device provided with a lifting mechanism 43 so that the carrying portion 41 is liftable relative to the main body portion 42, in the ex-warehouse stage, as shown in Fig. 17A, the handling device 40 reaches a preset position located at the bottom of the load fork device 10. As shown in Fig. 17B, the lifting mechanism 43 rises so that the carrying portion 41 carries the products, and then the lifting mechanism 43 continues to ascend so that the fork 1 releases the products in the height direction. As shown in Fig. 17C, the two forks 1 leave the product bottom by departing from each other along a first direction x, and next, the load fork device 10 is moved upward to be higher than the top surface of the products. Then, the handling device 40 carrying the products leaves so that it is possible to prevent collision with the fork 1 and improve the outbound reliability.

In some embodiments, as shown in Fig.2, there are a plurality of shelves 20 arranged at intervals, and an aisle 24 is formed between adjacent shelves 20, and the load fork device 10 is arranged outside the shelves 20 and movable along the outer side surface of the shelves 20.

The fork 1 has a fixed length, and the handling device 40 is configured to dock in the aisle 24 or outside the shelf 20 and located in the area directly below the load fork device 10; or the fork 1 is telescopic, and the handling device 40 is configured to dock in the aisle 24, outside the shelf 20 or in the area staggered from the load fork device 10 below the shelf 20, and the fork 1 projects forward or backward to hand over the products.

In this embodiment, for the structure in which the fork 1 has a fixed length, the handling device 40 needs to be located in the area directly below the load fork device 10, so that the products may be located in the intermediate area of the take member after product handover. For the telescopic structure of the fork 1, when the handling device 40 docks in the lower area of the shelf 20, the support portion 11 of the load fork device 10 on the shelf 20 may project backward to enter the lower area of the shelf 20 to hand over the products. Alternatively, the support portion 11 of the load fork device 10 on the adjacent shelf 20 may project forward to enter the lower area of the shelf 20 to hand over the products. This structure may also satisfy the requirements of handing over the products in the vertical direction when the handling device 40 does not dock in the area directly below the load fork device 10, so that the docking position of the handling device 40 is more flexible.

In some embodiments, there are at least two forks 1 and an opening 31 that is arranged at the end along the second direction y, and the handling device 40 is configured to enter the handover passage 3 from the opening 31 before product handover and leave the handover passage 3 from the opening 31 after product handover. In this embodiment, a fixed structure is maintained for the distance between the two forks 1, which facilitates the carrying portion 41 to enter or leave the handover passage 3.

In some embodiments, as shown in Figs. 12 and 13, the warehousing system further comprises: a first identification code 61 arranged at a first preset position on the ground, wherein for example, the first identification code 61 is a bar code or a two-dimensional code; and a first shooting member 62 arranged on the handling device 40 and configured to shoot the first identification code 61 to position the handling device 40.

In this embodiment, the first identification code 61 is detected by the first shooting member 62, so that the handling device 40 may be accurately positioned so as to align with the load fork device 10 to hand over the products, and in particular accurately positioned so as to prevent collision between the carrying portion 41 and the fork 1 on the side surface, and improve the reliability of handing over the products.

Furthermore, in addition to detecting an identification code, there are also many other positioning methods for the handling device 40, for example, laser navigation, magnetic stripe navigation and positioning, or any other form of navigation can be realized. The positioning of the load fork device 10 may also be calculated by the encoder.

In some embodiments, as shown in Figs. 12 and 13, the warehousing system further comprises: a second identification code 71 arranged at a second preset position on the shelf 20, wherein for example, the second identification code 71 is a bar code or a two-dimensional code; and a second shooting member 72 arranged on the load fork device 10 and configured to shoot the second identification code 71 to position the load fork device 10 in the first direction x and a height direction z.

For example, the second identification code 71 may be attached to a height closest to the ground, and the ends of the two forks 1 may be both provided with a second shooting member 71. The second identification code 71 may be attached to the beam 22 which may be captured by the second shooting members 71 on both sides. The load fork device 10 is configured to move to the area where the second identification code 71 is located, and then a distance deviation may be obtained by capturing the second identification code 71, and the position of the load fork device 10 may be finely adjusted according to the distance deviation until there is no distance deviation with the second identification code 71, thereby realizing the accurate positioning of the load fork device 10.

In this embodiment, the second identification code 71 is detected by the second shooting member 72, so that the load fork device 10 may be accurately positioned to align with the handling device 40 so as to hand over the products, accurately positioned in the first direction x so as to prevent collision between the carrying portion 41 and the inner side surface of the fork 1, and accurately positioned in the height direction z so as to prevent collision between the carrying portion 41 and the top or bottom of the fork 1 when the handling device 40 enters the area where the load fork device 10 is located, thereby improving the reliability of product handover.

Specifically, the product handover position may be outside the aisle 23 or the shelf 20, or below the shelf 20, and the most desirable position in the product handover state is that the center of the product corresponds to the center of the take member. For example, in the ex-warehouse stage, the center of the products corresponds to the center of the carrying portion 41, and in the in-warehouse stage, the center of the products corresponds to the center of the load fork device 10. By providing the above-mentioned first identification code 61 and second identification code 71, it is convenient to adjust and position to a preset product handover position.

Further, the present disclosure provides a warehousing method of a warehousing system based on the above-described embodiments. In some embodiments, the method comprises:
In Step 110, the handling device 40 is moved to a first preset position.

In Step 120, the load fork device 10 is moved on the shelf 20 to a second preset position.

In Step 130, the carrying portion 41 is caused to move vertically through the handover passage 3, so that the carrying portion 41 or the fork 1 as a take member carries the products to realize product handover.

Wherein, the performing sequence of Steps 110 and 120 may be set according to the requirements of the warehousing task, and Step 130 is performed after Steps 110 and 120. For example, in the ex-warehouse stage, since the load fork device 10 is above the carrying portion 41 of the handling device 40, the performing sequence of Steps 110 and 120 is not limited. In the in-warehouse stage, since the load fork device 10 is below the carrying portion 41, Step 120 is performed prior to Step 110.

In the warehousing method of this embodiment, the load fork device 10 and the handling device 40 which use a mode of vertical product handover, may simplify the action process of product handover, improve the accuracy of product handover, reduce the time required for product handover, and improve the handover efficiency, thereby improving the overall handover efficiency in the automatic storage system.

In some embodiments, in Step 310, the step of realizing product handover includes:
In Step 131, the carrying portion 41 and the fork 1 are caused to move vertically relative to each other so that the take member is in contact with a product bottom to carry the products.

In Step 132, the carrying portion 41 and the fork 1 are caused to move relative to each other so that the carrying portion 41 or the fork 1 as a give member releases the products after the take member carries the products.

Wherein, Step 132 is performed after Step 131.

In the ex-warehouse stage, the load fork device 10 carries the products, and the fork 1 is in an initial position higher than the top surface of the carrying portion 41, so as to move the handling device 40 to move below the fork 1. In this way, the carrying portion 41 enters the handover passage 3 from bottom to top. Then, Step 131 is performed so that by way of a relative movement mode that the load fork device 10 moves downward or the carrying portion 41 moves upward, the carrying portion 41 is in contact with the product bottom to carry the products. Next, Step 132 is performed to allow that the load fork device 10 further moves downward, or the carrying portion 41 moves upwards, or the two forks 1 depart from each other along the first direction x, so that the load fork device 10 releases the products.

In the in-warehouse stage, the handling device 40 carries the products, and the fork 1 is in an initial position lower than the top surface of the carrying portion 41, so as to move the handling device 40 to move to a position of the fork 1. In this way, the carrying portion 41 enters the handover passage 3 from top to bottom. Then, Step 131 is performed so that by way of a relative movement mode that the load fork device 10 moves upward or the carrying portion 41 moves downward, the fork 1 is in contact with the product bottom to carry the products. Next, Step 132 is performed to allow that the load fork device 10 further moves upward, or the carrying portion 41 moves downwards, or the two forks 1 depart from each other along the first direction x, so that the carrying portion 41 releases the products.

In this embodiment, it is possible to not only allow that the handling device 40 smoothly reaches the area where the products are handed over with the load fork device 10 and the take member reliably carries the products, but also release the give member from the products after the take member has carried the products, so that the take member carries the products to leave smoothly.

In some embodiments, the handling device 40 further includes a main body portion 42, and the carrying portion 41 is fixed in height relative to the main body portion 42. Wherein:
In the ex-warehouse stage, the second preset position is higher than the top surface of the carrying portion 41, and the step of product handover includes: causing the load fork device 10 to descend from the second preset position until the carrying portion 41 is in contact with the product bottom after the handling device 40 reaches the first preset position; and causing the load fork device 10 to continue to descend, so that the fork 1 releases the product bottom. During this process, continuous detection is carried out by the ranging sensor or the weight sensor, so that the descending displacement of the load fork device 10 does not exceed a preset distance, which prevents interference and collision with the main body portion 42 of the handling device 40.

In the in-warehouse stage, the second preset position is lower than the top surface of the carrying portion 41, and the movement of the load fork device 10 to the second preset position is performed before the handling devices carries the products 40 to move to the first preset position; the step of product handover includes: causing the load fork device 10 to ascend from the second preset position until the fork 1 is in contact with the product bottom; and causing the load fork device 10 to continue to ascend with the products, so that the carrying portion 41 releases the product bottom.

In this embodiment, this warehousing method may use a handling device 40 with a simpler structure and a lower cost, and may realize the whole product handover process by moving the load fork device 10 in the height direction z with convenient control. Moreover, since the carrying portion 41 which remains fixed may stably carry the products with a low center of gravity during the leaving process after the product handover is completed, which is beneficial to improving the traveling speed, thereby improving the efficiency of transferring the products to the target position.

In some embodiments, the handling device 40 further includes a main body portion 42 and a lifting mechanism 43, and the carrying portion 41 is mounted on the main body portion 42 in a liftable manner through the lifting mechanism 43, wherein:
In the ex-warehouse stage, the second preset position is higher than the top surface of the carrying portion 41, and the step of product handover includes: causing the lifting mechanism 43 to ascend with the carrying portion 41 until the carrying portion 41 is in contact with the product bottom after the handling device 40 reaches the first preset position; and causing the lifting mechanism 43 to continue to ascend with the carrying portion 41, or causing the load fork device 10 to start to descend from the second preset position, so that the fork 1 releases the product bottom; and/or

In the in-warehouse stage, the second preset position is lower than the top surface of the carrying portion 41, and the movement of the load fork device 10 to the second preset position is performed before the handling devices carries the products 40 to move to the first preset position; the step of product handover includes: causing the lifting mechanism 43 to descend with the carrying portion 41 until the fork 1 is in contact with the product bottom after the handling device 40 reaches the first preset position; and causing the lifting mechanism 43 to continue to descend with the carrying portion 41, or causing the load fork device 10 to start to ascend from the second preset position, so that the carrying portion 41 releases the product bottom.

In this embodiment, this warehousing method uses a handling device 40 with a lifting mechanism 43, so that the lifting mechanism 43 lifts the carrying portion 41 to satisfy the requirements of handing over the products with the load fork device 10, which may reduce the requirements of the docking height position of the load fork device 10. Moreover, after the handling device 40 carries the products, the products may be placed in a high position, which may adapt to a manual operation height during subsequent manual pickup at the workstation.

In some embodiments, there are a plurality of shelves 20 arranged at intervals, and an aisle 24 is formed between adjacent shelves 20; the step of moving the handling device 40 to a first preset position includes:
As shown in Fig. 12, if the fork 1 has a fixed length, the handling device 40 is moved to the first preset position inside the aisle 24 or outside the shelf 20 wherein the first preset position is located directly below the load fork device 10 at the second preset position.

As shown in Fig. 19, the fork 1 is telescopic so that the handling device 40 is moved to the first preset position inside the aisle 24, outside the shelf 20 or below the shelf 20, wherein the first preset position is located in an area staggered from the load fork device 10 along a second direction y perpendicular to the first direction x so that the fork 1 projects forward or backward to hand over the products.

In this embodiment, for the structure in which the fork 1 has a fixed length, the handling device 40 is located in the area directly below the load fork device 10, so that the products may be located in the intermediate area of the take member after product handover. For the telescopic structure of the fork 1, when the handling device 40 docks in the lower area of the shelf 20, the support plate 11 of the load fork device 10 on the shelf 20 may project backward to enter the lower area of the shelf 20 to hand over the products. Alternatively, the support plate 11 of the load fork device 10 on the adjacent shelf 20 may project forward to enter the lower area of the shelf 20 to hand over the products. This structure may also satisfy the requirements of handing over the products in the vertical direction when the handling device 40 does not dock in the area directly below the load fork device 10, so that the docking position of the handling device 40 is more flexible.

In some embodiments, after the product handover is completed, the warehousing method further comprises: first causing the handling device 40 to leave the first preset position, and then causing the load fork device 10 to perform a subsequent operation in an ex-warehouse stage; and/or causing the handling device 40 to leave the first preset position, and causing the load fork device 10 to perform an inbound operation in an inbound step.

In this embodiment, for the ex-warehouse stage, considering that the fork 1 which is located below the products and blocked by the products cannot move flexibly after the handling device 40 carries the products, the handling device 40 leaves the first preset position before the load fork device 10 moves freely. In the in-warehouse stage, after the load fork device 10 carries the products, although the fork 1 is located below, the handling device 40 and the load fork device 10 carrying the products when leaving do not affect each other, so that a temporal sequence is not limited.

In some embodiments, the handling device 40 further includes a main body portion 42 and a lifting mechanism 43, the carrying portion 41 is mounted on the main body portion 42 in a liftable manner through the lifting mechanism 43, and a buffer rack 23 is provided in a lower area of the shelf 20; the warehousing method further includes: causing the load fork device 10 to place the products on the buffer rack 23 in the case that all the handling devices 40 are in an occupied state; and/or causing the handling device 40 to obtain the products from the buffer rack 23 in the case that all the load fork devices 10 are in an occupied state.

Specifically, in the ex-warehouse stage, the lifting mechanism 43 ascends so that the carrying portion 41 carries the products and continues to hoist upwards after the carrying portion 41 carries the products to release the buffer shelf 23 from the products. Moreover, in the in-warehouse stage, the lifting mechanism 43 descends so that the buffer shelf 23 carries the products and continues to descend after the buffer shelf 23 carries the products so that the carrying portion 41 releases the products.

In this embodiment, the handling device 40 is provided with a lifting mechanism 43, so that the lifting mechanism 43 lifts the carrying portion 41 to satisfy the requirements of handing over the products to the buffer shelf 23. During the warehousing process, the products to be outbound by the load fork device 10 may be transferred to the handling device 40, and when the handling device 40 is occupied or malfunctioned so that it is impossible to reach the shelf 20, or when the current workstation does not need the products, the products may also be placed on the buffer shelf 23 temporarily. The products to inbound by the handling device 40 may be transferred to the load fork device 10 for direct storage. Alternatively, when the load fork device 10 is occupied, the handling device 40 may also place the products on the buffer shelf 23, which saves the standby time and the idle time of the handling device 40 and the load fork device 10 so as to improve the warehousing efficiency.

The warehousing control methods of the above-described embodiments may be all performed by the controller.

In addition, the present disclosure also provides a warehousing control device, comprising a memory and a processor. The memory is used for storing instructions, and the processor is coupled to the memory, so that the processor is configured to perform the above-described warehousing method based on the instructions stored in the memory. The processor may be a central processing unit CPU, or may be an application specific integrated circuit ASIC, or one or more integrated circuits configured to implement the embodiments of the present disclosure.

At the same time, the present disclosure also relates to a computer-readable storage medium, wherein the computer-readable storage medium stores computer instructions that, when executed by a processor, implements the warehousing method of the above-described embodiments.

In some embodiments, the functional unit modules described above may be implemented as a general purpose processor, a programmable logic controller (referred to as PLC for short), a digital signal processor (referred to as DSP for short), an application specific integrated circuit (referred to as ASIC for short), a field-programmable gate array (referred to as FPGA for short) or other programmable logic devices, discrete gates or transistor logic devices, discrete hardware assemblies or any proper combination thereof.

The above descriptions are only the exemplary embodiments of the present disclosure, but do not serve to limit the present disclosure. Any amendment, equivalent replacement, improvement, and the like made within the spirit and principles of the present disclosure should all be contained within the protection scope of the present disclosure.

## Claims

1. A load fork device for handing over products with a handling device (40) having a carrying portion (41), the load fork device (10) comprising:
a base (2);
at least one fork (1) connected to the base (2) and arranged at intervals in a first direction (x), wherein the fork (1) is configured to carry the products, and an area between two adjacent forks (1) and/or an outer side area of the fork (1) form a vertically-through handover passage (3), and the handover passage (3) is configured to allow the carrying portion (41) to vertically pass therethrough so that the carrying portion (41) or the fork (1) as a take member carries the products; and
a storage and retrieval component configured to transfer the products between the fork (1) and a storage location.

2. The load fork device according to claim 1, wherein the carrying portion (41) comprises at least one carrying surface, and the at least one fork (1) is configured to be alternately arranged with the at least one carrying surface when the products are handed over.

3. The load fork device according to claim 2, wherein there are two forks (1), and an area between the two forks (1) forms the handover passage (3), and the width of the handover passage (3) in the first direction (x) is smaller than the width of a product bottom to carry the products.

4. The load fork device according to claim 3, wherein in the first direction (x), the width of the handover passage (3) is greater than the width of the carrying portion (41).

5. The load fork device according to claim 3, wherein the two forks (1) are configured to depart from or approach to each other in the first direction (x), so as to allow the handling device (40) to leave the forks (1) in the case that the width of the handover passage (3) is greater than the width of the product bottom.

6. The load fork device according to claim 1, wherein the fork (1) is configured to have a gap with the carrying portion (41) in the first direction (x) in the case that the products are handed over.

7. The load fork device according to claim 1, wherein there are at least two forks (1), and an end along a second direction (y) of the handover passage (3) is provided with an opening (31) configured to allow the handling device (40) that carries the products to leave the forks (1), and the second direction (y) is perpendicular to the second direction (x).

8. The load fork device according to claim 1, wherein each fork (1) comprises a fixing portion (12) and a support portion (11), wherein the support portion (11) is movable in a second direction (y) relative to the fixing portion (12), and the second direction (y) is perpendicular to the first direction (x).

9. The load fork device according to claim 1, wherein the storage and retrieval component comprises:
a mounting member (7) arranged above the fork (1) and connected to the base (2);
a force applying member (8) arranged at a lower portion of the mounting member (7) and configured to drive the products to move from the top or the end of the products;
a traversing mechanism (91) arranged on the mounting member (7) and configured to drive the force applying member (8) to move in a second direction (y) perpendicular to the first direction (x); and
a lifting mechanism (92) arranged on the mounting member (7) and configured to drive the force applying member (8) to lift.

10. The load fork device according to claim 1, wherein the storage and retrieval component comprises:
two mounting members (7) arranged on both sides of the two forks (1) and connected to the base (2) respectively;
two force applying members (8) arranged at the inner sides of the two mounting members (7) and configured to drive the products to move from two side areas respectively; and
two traversing mechanisms (91) arranged on the two mounting members (7) and configured to drive the force applying member (8) at the side to move along a second direction (y) perpendicular to the first direction (x) respectively.

11. The load fork device according to claim 9 or 10, wherein the fork (1) is provided with a conveying member configured to cooperate with the force applying member (8) to move the products in place on the fork (1) or remove the products from the fork (1).

12. A warehousing system, comprising:
a shelf (20) configured to store products;
the load fork device (10) according to any one of claims 1 to 11 movable along a surface of the shelf (20) and configured to perform a warehousing operation; and
a handling device (40) having a carrying portion (41) configured to vertically pass through a handover passage (3) so that the carrying portion (41) or the fork (1) as a take member carries the products.

13. The warehousing system according to claim 12, wherein,
the carrying portion (41) and the fork (1) are configured to move vertically relative to each other so that the take member is in contact with a product bottom to carry the products; and/or
the carrying portion (41) and the fork (1) are configured to move relative to each other so that the carrying portion (41) or the fork (1) as a give member releases the products after the take member carries the products.

14. The warehousing system according to claim 12, wherein the handling device (40) further comprises a main body portion (42), and the carrying portion (41) is fixed in height relative to the main body portion (42); and the load fork device (10) is configured to move up and down so that the take member is in contact with a product bottom to carry the products, and move up and down so that the carrying portion (41) or the fork (1) as a give member releases the products.

15. The warehousing system according to claim 14, wherein,
the load fork device (10) further comprises a ranging sensor configured to detect a descending height of the load fork device (10) so that the descending height of the fork (1) does not exceed a preset distance after the carrying portion (41) carries the products in an ex-warehouse stage; or
the handling device (40) further comprises a weight sensor arranged on the carrying portion (41) and configured to detect a weight change of the carrying portion (41), so that the load fork device (10) stops descending in the case where the weight change of the carrying portion (41) after contacting with the product bottom in an ex-warehouse stage reaches a preset weight.

16. The warehousing system according to claim 12, wherein the handling device (40) further comprises a main body portion (42) and a lifting mechanism (43), the carrying portion (41) is mounted on the main body portion (42) in a liftable manner through the lifting mechanism (43), and the lifting mechanism (43) is configured to lift so that the take member is in contact with the product bottom to carry the products, and/or lift so that the carrying portion (41) or the fork (1) as a give member releases the products.

17. The warehousing system according to claim 12, wherein the handling device (40) further comprises a main body portion (42) and a lifting mechanism (43), and the carrying portion (41) is mounted on the main body portion (42) in a liftable manner through the lifting mechanism (43), and a buffer rack (23) is provided in a lower area of the shelf (20), and the handling device (40) is used for product handover with the buffer rack (23); and
the lifting mechanism (43) is configured to lift so that the carrying portion (41) or the buffer rack (23) as a take member is in contact with a product bottom to carry the products, and to lift so that the carrying portion (41) or the buffer rack (23) as a give member release the products.

18. The warehousing system according to claim 12, wherein the two forks (1) are configured to depart from and approach to each other in the first direction (x), and configured to depart from each other to release the products after the carrying portion (41) carries the products in an ex-warehouse stage, and approach to each other to carry the products in an in-warehouse stage.

19. The warehousing system according to claim 12, wherein there are a plurality of shelves (20) arranged at intervals, and an aisle (24) is formed between adjacent shelves (20), and the load fork device (10) is arranged outside the shelves (20) and movable along the outer side surface of the shelves (20); and
the fork (1) has a fixed length, and the handling device (40) is configured to dock in the aisle (24) or outside the shelf (20) and located in the area directly below the load fork device (10); or the fork (1) is telescopic, and the handling device (40) is configured to dock in the aisle (24), outside the shelf (20) or in the area staggered from the load fork device (10) below the shelf (20), and the fork (1) projects forward or backward to hand over the products.

20. The warehousing system according to any one of claims 12 to 19, wherein there are at least two forks (1) and an opening (31) that is arranged at the end along the second direction (y) of the handover passage (3), and the handling device (40) is configured to enter the handover passage (3) from the opening (31) before product handover, and leave the handover passage (3) from the opening (31) after product handover.

21. The warehousing system according to any one of claims 12 to 19, further comprising:
a first identification code (61) arranged at a first preset position on the ground; and
a first shooting member (62) arranged on the handling device (40) and configured to shoot the first identification code (61) to position the handling device (40).

22. The warehousing system according to any one of claims 12 to 19, further comprising:
a second identification code (71) arranged at a second preset position on the shelf (20); and
a second shooting member (72) arranged on the load fork device (10) and configured to shoot the second identification code (71) to position the load fork device (10) in the first direction (x) and a height direction (z).

23. A warehousing method based on the warehousing system according to any one of claims 12 to 22, comprising:
moving the handling device (40) to a first preset position;
moving the load fork device (10) on the shelf (20) to a second preset position; and
causing the carrying portion (41) to move vertically through the handover passage (3), so that the carrying portion (41) or the fork (1) as a take member carries the products to realize product handover.

24. The warehousing method according to claim 23, wherein the step of realizing product handover comprises:
causing the carrying portion (41) and the fork (1) to move vertically relative to each other so that the take member is in contact with a product bottom to carry the products; and
causing the carrying portion (41) and the fork (1) to move relative to each other so that the carrying portion (41) or the fork (1) as a give member releases the products after the take member carries the products.

25. The warehousing method according to claim 23, wherein the handling device (40) further comprises a main body portion (42), and the carrying portion (41) is fixed in height relative to the main body portion (42), wherein:
in an ex-warehouse stage, the second preset position is higher than the top surface of the carrying portion (41),
and the step of product handover comprises:
causing the load fork device (10) to descend from the second preset position until the carrying portion (41) is in contact with the product bottom after the handling device (40) reaches the first preset position; and
causing the load fork device (10) to continue to descend, so that the fork (1) releases the product bottom; and/or
in an in-warehouse stage, the second preset position is lower than the top surface of the carrying portion (41), and the movement of the load fork device (10) to the second preset position is performed before the handling devices (40) carries the products to move to the first preset position; the step of product handover comprises:
causing the load fork device (10) to ascend from the second preset position until the fork (1) is in contact with the product bottom; and
causing the load fork device (10) to continue to ascend with the products, so that the carrying portion (41) releases the product bottom.

26. The warehousing method according to claim 23, wherein the handling device (40) further comprises a main body portion (42) and a lifting mechanism (43), and the carrying portion (41) is mounted on the main body portion (42) in a liftable manner through the lifting mechanism (43), wherein:
in an ex-warehouse stage, the second preset position is higher than the top surface of the carrying portion (41), and the step of product handover comprises:
causing the lifting mechanism (43) to ascend with the carrying portion (41) until the carrying portion (41) is in contact with the product bottom after the handling device (40) reaches the first preset position; and
causing the lifting mechanism (43) to continue to ascend with the carrying portion (41), or causing the load fork device (10) to start to descend from the second preset position, so that the fork (1) releases the product bottom; and/or
in an in-warehouse stage, the second preset position is lower than the top surface of the carrying portion (41), and the movement of the load fork device (10) to the second preset position is performed before the handling devices carries the products (40) to move to the first preset position; the step of product handover comprises:
causing the lifting mechanism (43) to descend with the carrying portion (41) until the fork (1) is in contact with the product bottom after the handling device (40) reaches the first preset position; and
causing the lifting mechanism (43) to continue to descend with the carrying portion (41), or causing the load fork device (10) to start to ascend from the second preset position, so that the carrying portion (41) releases the product bottom.

27. The warehousing method according to claim 23, wherein there are a plurality of shelves (20) arranged at intervals, and an aisle (24) is formed between adjacent shelves (20); the step of moving the handling device (40) to a first preset position comprises:
moving the handling device (40) to the first preset position inside the aisle (24) or outside the shelf (20) if the fork (1) has a fixed length, wherein the first preset position is located directly below the load fork device (10) at the second preset position; and
moving the handling device (40) to the first preset position inside the aisle (24), outside the shelf (20) or below the shelf (20) if the fork (1) is telescopic, wherein the first preset position is located in an area staggered from the load fork device (10) along a second direction (y) perpendicular to the first direction (x) so that the fork (1) projects forward or backward to hand over the products.

28. The warehousing method according to claim 23, after product handover is completed, the warehousing method further comprises:
first causing the handling device (40) to leave the first preset position, and then causing the load fork device (10) to perform a subsequent operation in an ex-warehouse stage; and/or
causing the handling device (40) to leave the first preset position, and causing the load fork device (10) to perform an inbound operation in an inbound step.

29. The warehousing method according to claim 23, wherein the handling device (40) further comprises a main body portion (42) and a lifting mechanism (43), the carrying portion (41) is mounted on the main body portion (42) in a liftable manner through the lifting mechanism (43), and a buffer rack (23) is provided in a lower area of the shelf (20); the warehousing method further comprises:
causing the load fork device (10) to place the products on the buffer rack (23) in the case that all the handling devices (40) are in an occupied state; and/or
causing the handling device (40) to obtain the products from the buffer rack (23) in the case that all the load fork devices (10) are in an occupied state.
